# EUROPEAN PATENT APPLICATION

(11) **EP 4 175 360 A1**
(43) Date of publication of application: **03.05.2023**
(21) Application number: 21832128.9
(22) Date of filing: 26.04.2021
(51) Int. Cl.: H04W 36/08, H04W 36/00

(54) **HANDOVER METHOD, NETWORK DEVICE, USER EQUIPMENT AND COMMUNICATION SYSTEM**

(30) Priority: 29.06.2020 CN 202010609585
(71) Applicant: ZTE Corporation, Shenzhen, Guangdong 518057 (CN)
(72) Inventor: WU, Ying, Shenzhen, Guangdong 518057 (CN); XIONG, Zhiyao, Shenzhen, Guangdong 518057 (CN)
(74) Representative: Osterhoff, Utz
(86) International application number: PCT/CN2021/089964
(87) International publication number: WO 2022/001330

(57) **Abstract**

Disclosed are a handover method, a network device, a user equipment, and a communication system. The handover method includes: updating a next hop chaining counter value and a next hop key in response to receiving a first handover request sent by a source base station for handing over a user equipment to a target base station, and sending a second handover request to the target base station; restoring the next hop chaining counter value and the next hop key to values before the update in response to receiving a message indicating that a handover preparation fails sent by the target base station; and sending a handover command to the source base station in response to receiving the message indicating that the handover preparation is successful sent by the target base station, to make the source base station control the user equipment to perform handover reconfiguration with the target base station.

## Description

### TECHNICAL FIELD

Embodiments of the present application relate to the technical field of communication, and in particular, to a handover method, a network device, a user equipment, and a communication system.

### BACKGROUND

During the process of mobile communication between a user and a cell, handover refers to the process of handing over the wireless connection link of communication from one cell to another cell under the premise of ensuring uninterrupted communication. In the process of using the wireless communication network, when the user moves from the cell covered by the current base station to another cell covered by the base station, or when the communication quality deteriorates due to external interference or other reasons, the user equipment will send a measurement report to the current cell, so that the user equipment can switch to another cell, to ensure the normal communication of the user equipment as much as possible.

However, if the user equipment performs multiple handovers with the cell, the security keys will not match, causing the user equipment to be disconnected, which affects user experience.

### SUMMARY

Embodiments of the present application provide a handover method applied to a network device, including: updating a next hop chaining counter value and a next hop key in response to receiving a first handover request sent by a source base station for handing over a user equipment to a target base station, and sending a second handover request to the target base station; restoring the next hop chaining counter value and the next hop key to values before the update in response to receiving a message indicating that a handover preparation fails sent by the target base station; and sending a handover command to the source base station in response to receiving the message indicating that the handover preparation is successful sent by the target base station, to make the source base station control the user equipment to perform handover reconfiguration with the target base station.

Embodiments of the present application further provide a communication system, including: a user equipment, a source base station, and a network device; the source base station is configured to send a first handover request for handing over the user equipment to a target base station to the network device; the network device is configured to update a next hop chaining counter value and a next hop key in response to receiving the first handover request, and send a second handover request to the target base station; the network device is configured to restore the next hop chaining counter value and the next hop key to values before the update in response to receiving a message indicating that a handover preparation fails sent by the target base station; the network device is configured to send a handover command to the source base station in response to receiving a message indicating that the handover preparation is successful sent by the target base station; and the source base station is further configured to control the user equipment to perform handover reconfiguration with the target base station according to the handover command.

Embodiments of the present application further provide a network device, including: a memory, a processor, a program stored on the memory and operable on the processor, and a data bus for realizing communication between the processor and the memory, when the program is executed by the processor, the operations of the handover method as described above are implemented.

Embodiments of the present application further provide a handover method applied to a user equipment, including: sending a measurement report comprising at least one candidate base station to a source base station, to make the source base station send a third handover request for handing over the user equipment to a target base station to a network device, the target base station being any one of candidate base stations; obtaining flip times of a next hop chaining counter value according to the next hop chaining counter value in response to receiving a handover reconfiguration request comprising the next hop chaining counter value sent by the source base station, wherein the source base station is configured to send the handover reconfiguration request to the user equipment in response to receiving a handover command sent by the network device; obtaining a next hop key according to the next hop chaining counter value and the flip times; performing handover reconfiguration with the target base station based on the next hop chaining counter value and the next hop key.

Embodiments of the present application further provide a communication system, including: a user equipment, a source base station, and a network device; the user equipment is configured to send a measurement report comprising at least one candidate base station to the source base station; the source base station is configured to send a third handover request for handing over the user equipment to a target base station to the network device, the target base station being any one of candidate base stations; the source base station is further configured to send a handover reconfiguration request comprising a next hop chaining counter value to the user equipment in response to receiving a handover command sent by the network device; the user equipment is further configured to obtain flip times of the next hop chaining counter value according to the next hop chaining counter value in response to receiving the handover reconfiguration request, and obtain a next hop key according to the next hop chaining counter value and the flip times; and the user equipment is further configured to perform handover reconfiguration with the target base station based on the next hop chaining counter value and the next hop key.

Embodiments of the present application further provide a user equipment, including: a memory, a processor, a program stored on the memory and operable on the processor, and a data bus for realizing communication between the processor and the memory, when the program is executed by the processor, the operations of the handover method as described above are implemented.

### BRIEF DESCRIPTION OF THE DRAWINGS

FIG. 1 is a specific flowchart of a handover method according to a first embodiment of the present application.
FIG. 2 is a communication flowchart of a handover method according to a first embodiment of the present application.
FIG. 3 is a schematic structural diagram of a communication system according to a second embodiment and a fourth embodiment of the present application.
FIG. 4 is a specific flowchart of a handover method according to a third embodiment of the present application.
FIG. 5 is a communication flowchart of a handover method according to a third embodiment of the present application.
FIG. 6 is a schematic diagram of a network device according to a fifth embodiment of the present application and a user equipment according to a sixth embodiment of the present application.

### DETAILED DESCRIPTION OF THE EMBODIMENTS

It should be understood that the specific embodiments described herein are only used to explain the present application, and are not intended to limit the present application.

In the subsequent description, use of suffixes such as "module", "part" or "unit" for denoting elements is only for facilitating the description of the present application and has no specific meaning by itself. Therefore, "module", "part" or "unit" may be used in combination.

The main purpose of embodiments of the present application is to provide a handover method, a network device, a user equipment, and a communication system, which can calculate an accurate next hop key, which prevents the user equipment from being disconnected due to the mismatch of the next hop key, so that the user equipment can perform handover and reconfiguration with the matching target base station.

A first embodiment of the present application provides a handover method applied to a network device. The network device can be access and mobility management function (AMF) module on the 5G core network side. The network device is responsible for the handover management of the user equipment (UE) between base stations, and the user equipment 1 may be a mobile terminal such as a mobile phone or a tablet computer.

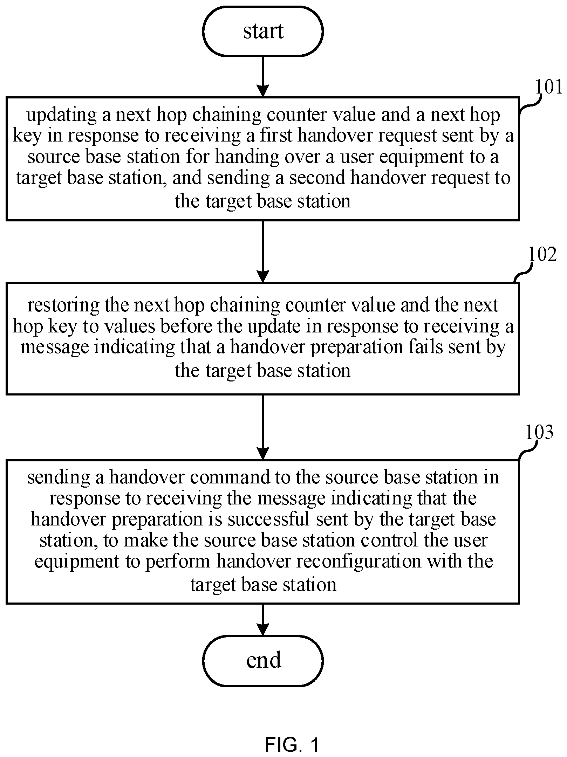

The specific flowchart of the handover method in this embodiment is shown in FIG. 1.

Operation 101, updating a next hop chaining counter value and a next hop key in response to receiving a first handover request sent by a source base station for handing over a user equipment to a target base station, and sending a second handover request to the target base station.

The user equipment can continuously measure and report the signal quality of surrounding base stations (cells) through radio resource control (RRC) signaling. When the preset trigger condition is met, the user equipment sends a measurement report to the source base station S-gNB, the measurement report includes identification information of at least one candidate base station (candidate cell). When the source base station S-gNB receives the measurement report, it determines that it is necessary to hand over a base station. The source base station S-gNB selects a base station from the candidate base stations as the target base station T-gNB, and initiates to the AMF module (i.e., the network device) a first handover request for handing over the user equipment to the target base station T-gNB (that is, the source side handover request). The first handover request includes the identification information of the target base station T-gNB. After receiving the first handover request, the AMF module updates the next hop chaining counter (NCC) value and the next hop (NH) key. Then, based on the identification information of the target base station T-gNB, a second handover request (target side handover request) is sent to the target base station T-gNB, and the second handover request includes the updated NCC and NH. It should be noted that, in this embodiment, when the AMF module receives the first handover request, both the core network key KAMF and the access stratum (AS) key remain unchanged, so as to avoid affecting the recovery of the next hop chaining counter value and the next hop key.

The specific way for the AMF module to update NCC and NH is increasing a current next hop chaining counter value in a preset manner to obtain an updated next hop chaining counter value, and obtaining an updated next hop key according to the updated next hop chaining counter value. Take the initial value of NCC as M as an example, at this time NH=K, then update NCC, add 1 to NCC, at this time NCC=M+1. Then, based on the updated NCC value, NH corresponding to the NCC value is estimated, NH=K'.

Operation 102, restoring the next hop chaining counter value and the next hop key to values before the update in response to receiving a message indicating that a handover preparation fails sent by the target base station.

Operation 103, sending a handover command to the source base station in response to receiving the message indicating that the handover preparation is successful sent by the target base station, to make the source base station control the user equipment to perform handover reconfiguration with the target base station.

When the target base station T-gNB receives the second handover request (target side handover request), it performs handover preparations, such as resource admission, security context update and other operations. If the handover preparation is abnormal, the target base station T-gNB sends a message indicating that the handover preparation fails to the AMF module, and the AMF module restores NCC and NH to the values before the update, that is, NCC=M+1, NH=K', restores to NCC=M, NH=K. Then, the AMF module sends a message indicating handover failure to the source base station S-gNB. At this time, the source base station S-gNB determines whether there are still candidate base station. If there is still a candidate base station, then the next candidate base station is used as the target base station T-gNB, and then the first handover request (source side handover request) is sent to the AMF module. The above judgment process is repeated until there is no candidate base station or the user equipment has completed handover reconfiguration with the target base station T-gNB.

The target base station T-gNB sends a message indicating that the handover preparation is successful to the AMF module when there is no abnormality in the handover preparation. At this time, the AMF module sends a handover command to the source base station S-gNB. The handover command includes the current next hop chaining counter value and the identification information of the current target base station T-gNB. When the source base station S-gNB receives the handover command, it sends a handover reconfiguration request to the user equipment. The handover reconfiguration request includes the current next hop chaining counter value and the identification information of the current target base station T-gNB in the handover command. At this time, NCC=M+1. The user equipment can calculate the NH corresponding to the NCC, NH=K', and then perform handover and reconfiguration with the target base station T-gNB based on the identification information of the target base station T-gNB. The target base station T-gNB includes updated NCC and NH values, that is, the user equipment and the target base station T-gNB have the same NCC and NH, so that the user equipment and the target base station T-gNB can complete handover reconfiguration.

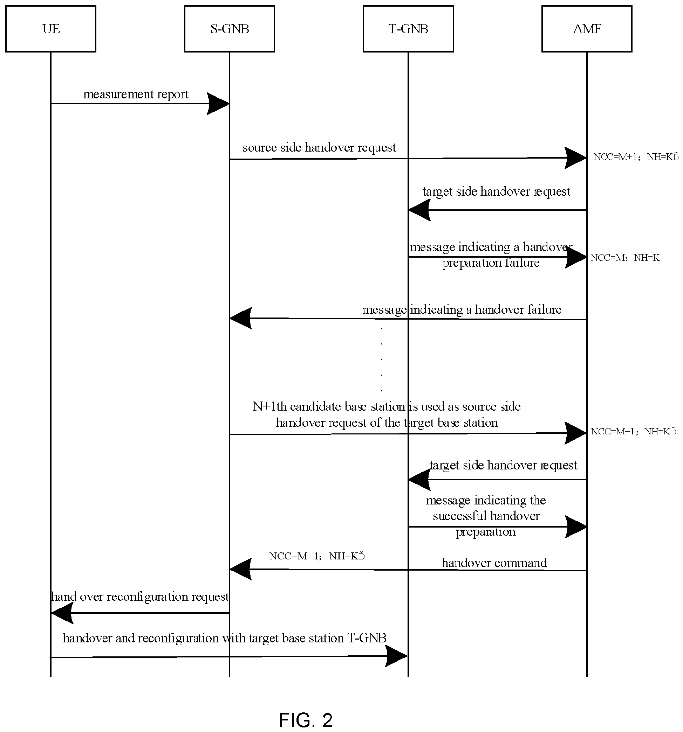

The handover method in this embodiment will be described below with reference to the communication flowchart in FIG. 2.

The user equipment can continuously measure and report the signal quality of surrounding base stations (cells) through radio resource control (RRC) signaling. When the preset trigger condition is met, the user equipment sends a measurement report to the source base station S-gNB, and the measurement report includes identification information of at least one candidate base station (candidate cell). The trigger condition is, for example, any one of the following: the quality of service of the source base station is lower than the preset threshold, the quality of service of the neighboring base station is higher than the preset threshold, and the difference between the quality of service of the neighboring base station and the quality of service of the source base station is greater than the preset threshold. A candidate base station may be a base station whose service quality is higher than a preset threshold.

When the source base station S-gNB receives the measurement report sent by the user equipment, all the candidate base stations can be sorted according to the quality of service. The first candidate base station is selected as the target base station T-gNB in order, and then a source side handover request (first handover request) is sent to the AMF module, and the source side handover request includes the identification information of the target base station T-gNB.

When the AMF module receives the source side handover request, it updates the NCC and NM. Taking NCC=M, NH=K as an example, after updating, NCC=M+1, NH=K', and then cache the initial NCC and NM. Based on the identification information of the target base station T-gNB, a target side handover request (second handover request) is initiated to the target base station T-gNB, and the target side handover request includes NCC=M+1, NH=K'.

After receiving the handover request from the target side, the target base station T-gNB performs handover preparations, such as resource admission, security context update, etc. If an abnormality occurs in the handover preparation, a message indicating that the handover preparation fails is sent to the AMF module.

After receiving a message indicating that the handover preparation failed, the AMF module restores NCC=M+1, NH=K' to NCC=M, NH=K, and then sends a message indicating handover failure to the source base station S-gNB. Even after N times of handover failures, NCC=M and NH=K in the AMF module.

After the source base station S-gNB receives the message indicating the handover failure, it determines whether there are still candidate base stations. If there are still candidate base stations, take the next candidate base station as the target base station T-gNB, and then send a source handover request to the AMF module. The foregoing process is repeated until all candidate base stations fail to prepare for handover, or the user equipment and the target base station T-gNB have completed handover reconfiguration.

If the N+1th candidate base station is currently used as the target base station T-gNB, after the AMF module updates NCC and NH, NCC=M+1, NH=K', the AMF module initiates a target side handover request (second handover request) to the target base station T-gNB, and the AMF module receives a message indicating that the handover preparation is successful sent by the target base station T-gNB. The AMF module sends a handover command to the source base station S-gNB, and the handover command includes identification information of a target base station T-gNB whose NCC=M+1 matches the user equipment. N is an integer greater than or equal to 2.

When receiving the handover command, the source base station S-gNB sends a handover reconfiguration request to the user equipment. The handover reconfiguration request includes identification information of the target base station T-gNB whose NCC=M+1 matches the user equipment, and at this time NCC=M+1.

The user equipment can calculate the NH corresponding to the NCC, NH=K', and then perform handover and reconfiguration with the target base station T-gNB based on the identification information of the target base station T-gNB matching the user equipment. The target base station T-gNB contains updated NCC and NH values, that is, the user equipment and the target base station T-gNB have the same NCC and NH, so that the user equipment and the target base station T-gNB can complete handover reconfiguration.

Embodiments of the present application provide a handover method applied to a network device, including: updating a next hop chaining counter value and a next hop key in response to receiving a first handover request sent by a source base station for handing over a user equipment to a target base station, and sending a second handover request to the target base station; restoring the next hop chaining counter value and the next hop key to values before the update in response to receiving a message indicating that a handover preparation fails sent by the target base station; and sending a handover command to the source base station in response to receiving the message indicating that the handover preparation is successful sent by the target base station, to make the source base station control the user equipment to perform handover reconfiguration with the target base station. Thus, when the current target base station cannot be switched and reconfigured with the user equipment, the network device will not update the next hop chaining counter value and the next hop key. In this way, multiple updates to the next hop chaining counter value are avoided, and the user equipment cannot calculate the matching next hop key based on the one-hop chaining counter value. That is, the user equipment can calculate the accurate next hop key according to the next hop chaining counter value, so as to prevent the user equipment from going offline due to the mismatch of the next hop key, so that the user equipment can perform handover and reconfiguration with the matching target base station.

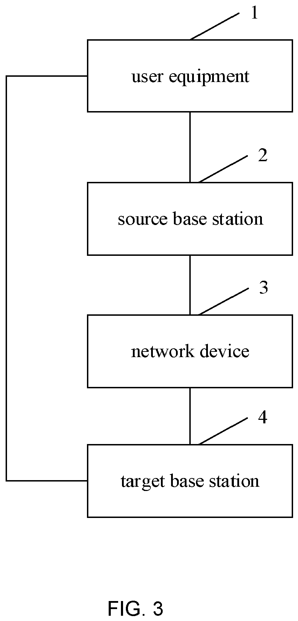

A second embodiment of the present application provides a communication system. The communication system can be a 5G mobile communication system. As shown in FIG. 3, the communication system includes a user equipment 1, a source base station 2 and a network device 3. The user equipment 1 can be a mobile terminal such as a mobile phone or a tablet computer; the network device 3 can be an access and mobility management function (AMF) module on the 5G core network side.

The source base station 2 is configured to send a first handover request for handing over the user equipment 1 to the target base station 4 to the network device 3.

The network device 3 is configured to update the next hop chaining counter value and the next hop key when receiving the first handover request, and send the second handover request to the target base station 4.

In an embodiment, the network device 3 is configured to increase a current next hop chaining counter value in a preset manner to obtain an updated next hop chaining counter value, and obtain an updated next hop key according to the updated next hop chaining counter value.

The network device 3 is configured to restore the next hop chaining counter value and the next hop key to the values before the update when receiving the message indicating that the handover preparation fails sent by the target base station 4.

The network device 3 is further configured to send a message indicating handover failure to the source base station 2 after restoring the next hop chaining counter value and the next hop key to values before updating.

The source base station 2 is configured to use the next candidate base station as the target base station 4 to send a handover request to the network device 3 when receiving a message indicating handover failure.

The network device 3 is configured to send a handover command to the source base station 2 when receiving a message indicating that the handover preparation is successful sent by the target base station 4.

The source base station 2 is further configured to control the user equipment 1 to perform handover reconfiguration with the target base station 4 according to the handover command.

Since the first embodiment corresponds to this embodiment, this embodiment can be implemented in cooperation with the first embodiment. The relevant technical details mentioned in the first embodiment are still valid in this embodiment, and the technical effects that can be achieved in the first embodiment can also be realized in this embodiment, and in order to reduce repetition, details are not repeated here. Correspondingly, the relevant technical details mentioned in this embodiment can also be applied in the first embodiment.

Embodiments of the present application provide a communication system. When receiving the first handover request sent by the source base station for handing over the user equipment to the target base station, the network device updates the next hop chaining counter value and the next-hop key, and sends a second handover request to the target base station. If the message indicating that the handover preparation fails sent by the target base station is received, the next hop chaining counter value and the next hop key are respectively restored to the values before the update. If the message indicating that the handover preparation is successful sent by the target base station is received, a handover command is sent to the source base station for the source base station to control the user equipment to perform handover reconfiguration with the target base station. Thus, when the current target base station cannot be switched and reconfigured with the user equipment, the network device will not update the next hop chaining counter value and the next hop key. In this way, multiple updates to the next hop chaining counter value are avoided, and the user equipment cannot calculate the matching next hop key based on the one-hop chaining counter value. That is, the user equipment can calculate the accurate next hop key according to the next hop chaining counter value, so as to prevent the user equipment from going offline due to the mismatch of the next hop key, so that the user equipment can perform handover and reconfiguration with the matching target base station.

A third embodiment of the present application provides a handover method applied to a user equipment. The user equipment can be a mobile terminal such as a mobile phone or a tablet computer. The user equipment is responsible for its handover management between base stations by the network device, and the network device can be the access and mobility management function (AMF) module on the 5G core network side.

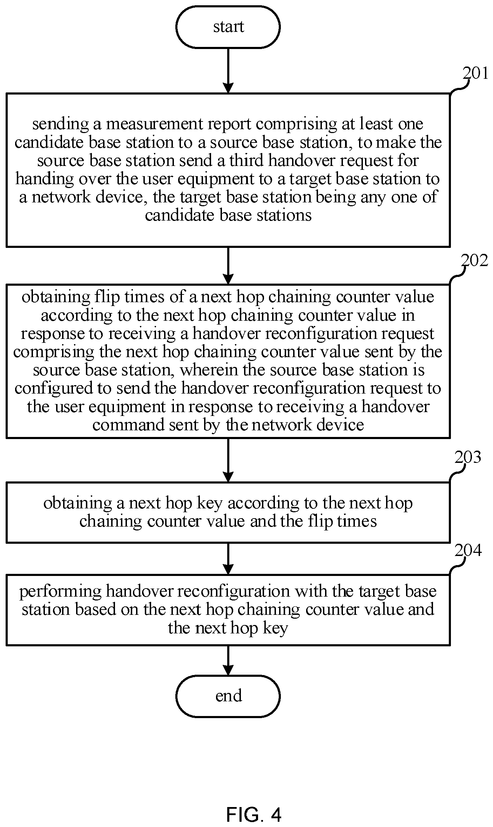

The specific flowchart of the handover method in this embodiment is shown in FIG. 4.

Operation 201, sending a measurement report comprising at least one candidate base station to a source base station, to make the source base station send a third handover request for handing over the user equipment to a target base station to a network device, the target base station being any one of candidate base stations.

The user equipment can continuously measure and report the signal quality of surrounding base stations (cells) through radio resource control (RRC) signaling. When the preset trigger condition is met, the user equipment sends a measurement report to the source base station S-gNB, the measurement report includes identification information of at least one candidate base station (candidate cell).

When the source base station S-gNB receives the measurement report, it determines that it is necessary to hand over a base station. The source base station S-gNB selects a base station from the candidate base stations as the target base station T-gNB, and initiates to the AMF module (i.e., the network device) a third handover request for handing over the user equipment to the target base station T-gNB (that is, the source side handover request). The third handover request includes the identification information of the target base station T-gNB.

Operation 202, obtaining flip times of a next hop chaining counter value according to the next hop chaining counter value in response to receiving a handover reconfiguration request comprising the next hop chaining counter value sent by the source base station, wherein the source base station is configured to send the handover reconfiguration request to the user equipment in response to receiving a handover command sent by the network device.

Operation 203, obtaining a next hop key according to the next hop chaining counter value and the flip times.

Operation 204, performing handover reconfiguration with the target base station based on the next hop chaining counter value and the next hop key.

After receiving the third handover request (i.e., source side handover request), the AMF module updates the next hop chaining counter (NCC) value and the next hop (NH) key. Then, based on the identification information of the target base station T-gNB, a fourth handover request (target side handover request) is sent to the target base station T-gNB, and the fourth handover request includes the updated NCC and NH. For example, take the initial value of NCC as M as an example, at this time NH=KM, then add 1 to NCC, at this time NCC=M+1, and then calculate NH corresponding to the NCC value based on the updated NCC value, NH=KM+1. If it is the Nth target base station T-gNB at this time, then NCC=M+N, NH=KM+N. It should be noted that, in this embodiment, when the AMF module receives the first handover request, both the core network key KAMF and the access stratum (AS) key remain unchanged.

When the target base station T-gNB receives the fourth handover request (target side handover request), it performs handover preparations, such as resource admission, security context update and other operations. If the handover preparation is abnormal, the target base station T-gNB sends a message indicating the handover preparation failure to the AMF module, and the AMF module sends a message indicating the handover failure to the source base station S-gNB. When the source base station S-gNB receives the message indicating the handover failure, it takes the next candidate base station as the target base station to send a handover request to the AMF module, and repeats the above process.

If there is no abnormality in the handover preparation, a message indicating that the handover preparation is successful is sent to the AMF module, and at this time, the AMF module sends a handover command to the source base station S-gNB. The handover command includes the current next hop chaining counter value and the identification information of the current target base station T-gNB. When the source base station S-gNB receives the handover command, it sends a handover reconfiguration request to the user equipment. The handover reconfiguration request includes the current next hop chaining counter value and the identification information of the current target base station T-gNB in the handover command.

When the user equipment receives the handover reconfiguration request sent by the source base station S-gNB, the flip times of the next hop chaining counter value is obtained according to the next hop chaining counter value, and the next hop key is obtained according to the next hop chaining counter value and the flip times. Based on the next hop chaining counter value and the next hop key, the handover reconfiguration is performed with the target base station T-gNB. Since the flip times is combined when calculating the next hop key, the next hop key matching the next hop chaining counter value can be obtained. Thus, the user equipment can complete handover reconfiguration with the target base station T-gNB.

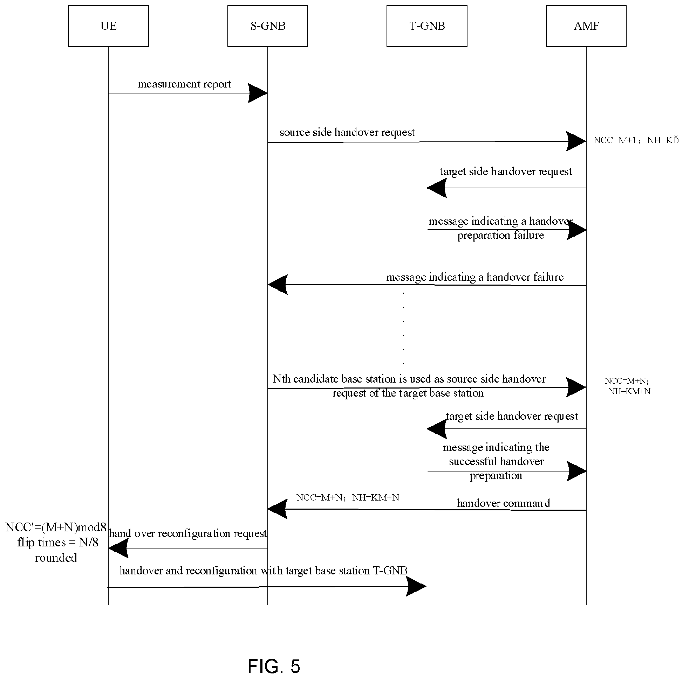

The handover method in this embodiment will be described below with reference to the communication flowchart in FIG. 5.

The user equipment can continuously measure and report the signal quality of surrounding base stations (cells) through radio resource control signaling. When the preset trigger condition is met, the user equipment sends a measurement report to the source base station S-gNB, and the measurement report includes identification information of at least one candidate base station (candidate cell). The trigger condition is, for example, any one of the following: the quality of service of the source base station is lower than the preset threshold, the quality of service of the neighboring base station is higher than the preset threshold, and the difference between the quality of service of the neighboring base station and the quality of service of the source base station is greater than the preset threshold. A candidate base station may be a base station whose service quality is higher than a preset threshold.

When the source base station S-gNB receives the measurement report sent by the user equipment UE, it can sort all the candidate base stations according to the quality of service. The first candidate base station in order is selected as the target base station T-gNB, and then a source side handover request (the third handover request) is sent to the AMF module. The source side handover request includes identification information of the target base station T-gNB.

When the AMF module receives the source side handover request, it updates the NCC and NM. Taking NCC=M, NH=KM as an example, after updating, NCC=M+1, NH=KM+1. Based on the identification information of the target base station T-gNB, a target side handover request (fourth handover request) is initiated to the target base station T-gNB. The target handover request includes NCC=M+1, NH=KM+1.

After receiving the handover request from the target side, the target base station T-gNB performs handover preparations, such as resource admission, security context update, etc. If an abnormality occurs in the handover preparation, a message indicating that the handover preparation fails is sent to the AMF module.

After receiving the message indicating the handover preparation failure, the AMF module sends a message indicating the handover failure to the source base station S-gNB.

After the source base station S-gNB receives the message indicating the handover failure, it determines whether there are still candidate base stations. If there are still candidate base stations, the next candidate base station is taken as the target base station T-gNB, and then a source side handover request is sent to the AMF module. The foregoing process is repeated until all candidate base stations fail to prepare for handover, or the user equipment and the target base station T-gNB have completed handover reconfiguration.

If the Nth candidate base station is the target base station T-gNB, after the AMF module updates NCC and NH, NCC=M+N, NH=KM+N. The AMF module initiates a target side handover request (fourth handover request) to the target base station T-gNB. The target handover request includes NCC=M+N, NH=KM+N. If the message indicating that the handover preparation is successful sent by the target base station T-gNB is received, the AMF module sends a handover command to the source base station S-gNB. The handover command includes NCC=M+N and identification information of the target base station T-gNB (the Nth candidate base station).

When the source base station S-gNB receives the handover command, it sends a handover reconfiguration request to the user equipment. The handover reconfiguration request includes NCC=M+N and identification information of the target base station T-gNB (the Nth candidate base station).

The user equipment obtains the flip times Y of the next hop chaining counter value according to NCC=M+N. The flip times Y=N/8 is rounded to an integer. Since NCC≤7, it can be seen that the current NCC'=(M+N)mod8. Therefore, when calculating the NH value according to the NCC value, it can be performed 8*Y+NCC' times, 8*Y+NCC'=N, that is, NH=KM+N. Then, based on the identification information of the target base station T-gNB (the Nth candidate base station), handover reconfiguration is performed with the target base station T-gNB (the Nth candidate base station), at this time, NH=KM+N in the target base station T-gNB (the Nth candidate base station). That is, the user equipment is equal to the NCC and NH in the target base station T-gNB, so that the user equipment UE can complete handover reconfiguration with the target base station T-gNB (the Nth candidate base station).

Embodiments of the present application provide a handover method. The user equipment can send a measurement report including at least one candidate base station to the source base station. The source base station then sends to the network device a third handover request for handing over the user equipment to the target base station, where the target base station is any candidate base station. When the source base station receives the handover command sent by the network device, it sends a handover reconfiguration request including the next hop chaining counter value to the user equipment. The user equipment obtains the flip times of the next hop chaining counter value according to the next hop chaining counter value, and then obtains the next hop key according to the next hop chaining counter value and the flip times. Then, handover reconfiguration with the target base station can be performed based on the next hop chaining counter value and the next hop key. Thus, the user equipment calculates the next hop key by combining the value of the next hop chaining counter and the flip times of the next hop chaining counter value, which can prevent the user equipment from being unable to calculate the matching next hop key according to the next hop chaining counter value due to the inversion of the next hop chaining counter value. That is, when the next hop chaining counter value flips, the accurate next hop key can still be calculated. This prevents the user equipment from being disconnected due to the mismatch of the next hop key, so that the user equipment can perform handover and reconfiguration with the matching target base station.

A fourth embodiment of the present application provides a communication system. The communication system can be a 5G mobile communication system. As shown in FIG. 3, the communication system includes a user equipment 1, a source base station 2 and a network device 3. The user equipment 1 can be a mobile terminal such as a mobile phone or a tablet computer; the network device 3 can be an access and mobility management function (AMF) module on the 5G core network side.

The user equipment 1 is configured to send a measurement report including at least one candidate base station to the source base station 2. The user equipment 1 is configured to perform measurement based on the received measurement configuration sent by the source base station, and send a measurement report to the source base station 2 when any preset trigger condition is met.

The source base station 2 is configured to send to the network device a third handover request for handing over the user equipment 1 to the target base station 4, where the target base station 4 is any candidate base station. The network device 3 is configured to update the next hop chaining counter value and the next hop key when receiving the third handover request, and send a fourth handover request to the target base station 4, and send a handover command to the source base station 2 when receiving the message indicating the successful handover preparation sent by the target base station 4. The network device 3 is further configured to send a message indicating a handover failure to the source base station 2 when receiving a message indicating a handover preparation failure sent by the target base station 4. The source base station 2 is configured to use the next candidate base station as the target base station 4 to send a handover request to the network device 3 when receiving a message indicating handover failure.

The source base station 2 is further configured to send a handover reconfiguration request including the next hop chaining counter value to the user equipment 1 when receiving the handover command sent by the network device 3.

When a handover reconfiguration request is received, the user equipment 1 is further configured to obtain the flip times of the next hop chaining counter value according to the next hop chaining counter value, and obtain the next hop key according to the next hop chaining counter value and the flip times.

The user equipment 1 is further configured to perform handover reconfiguration with the target base station 4 based on the next hop chaining counter value and the next hop key.

The user equipment 1 is configured to perform measurement based on the received measurement configuration sent by the source base station, and send a measurement report to the source base station 2 when any preset trigger condition is met.

Since the third embodiment corresponds to the present embodiment, the present embodiment can be implemented in cooperation with the third embodiment. The relevant technical details mentioned in the third embodiment are still valid in this embodiment, and the technical effects that can be achieved in the third embodiment can also be realized in this embodiment, and in order to reduce repetition, details are not repeated here. Correspondingly, the relevant technical details mentioned in this embodiment can also be applied in the third embodiment.

Embodiments of the present application provide a communication system. The user equipment can send a measurement report including at least one candidate base station to the source base station. The source base station then sends to the network device a third handover request for handing over the user equipment to the target base station, where the target base station is any candidate base station. When the source base station receives the handover command sent by the network device, it sends a handover reconfiguration request including the next hop chaining counter value to the user equipment. The user equipment obtains the flip times of the next hop chaining counter value according to the next hop chaining counter value, and then obtains the next hop key according to the next hop chaining counter value and the flip times. Then, handover reconfiguration with the target base station can be performed based on the next hop chaining counter value and the next hop key. Thus, the user equipment calculates the next hop key by combining the value of the next hop chaining counter and the flip times of the next hop chaining counter value, which can prevent the user equipment from being unable to calculate the matching next hop key according to the next hop chaining counter value due to the inversion of the next hop chaining counter value. That is, when the next hop chaining counter value flips, the accurate next hop key can still be calculated. This prevents the user equipment from being disconnected due to the mismatch of the next hop key, so that the user equipment can perform handover and reconfiguration with the matching target base station.

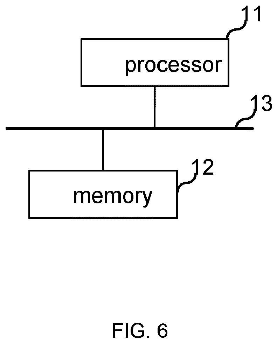

A fifth embodiment of the present application provides network device. As shown in FIG. 6, the network device includes a memory 11, a processor 12, a program stored on the memory and executable on the processor, and a data bus 13 for realizing communication between the processor 11 and the memory 12. When the program is executed by the processor, the specific operations of the handover method in the first embodiment are implemented.

A sixth embodiment of the present application provides a user equipment. As shown in FIG. 6, the user equipment includes a memory 11, a processor 12, a program stored on the memory and operable on the processor, and a data bus 13 for realizing communication between the processor 11 and the memory 12. When the program is executed by the processor, the specific operations of the handover method as shown in the third embodiment are implemented.

A seventh embodiment of the present application provides a storage medium. The storage medium stores one or more programs, and the one or more programs can be executed by one or more processors to implement the operations of the aforementioned methods.

Those of ordinary skill in the art can understand that all or some of the steps in the methods disclosed above, the functional modules/units in the system, and the device can be implemented as software, firmware, hardware, and an appropriate combination thereof.

In a hardware embodiment, the division between functional modules/units mentioned in the above description does not necessarily correspond to the division of physical components. For example, one physical component may have multiple functions, or one function or step may be performed cooperatively by several physical components. Some or all of the physical components may be implemented as software executed by a processor, such as a central processing unit, digital signal processor, or microprocessor, or as hardware, or as an integrated circuit, such as an application-specific integrated circuit. Such software may be distributed on computer readable media, which may include computer storage media (or non-transitory media) and communication media (or transitory media). As known to those of ordinary skill in the art, the term computer storage media includes volatile and nonvolatile, removable and non-removable media implemented in any method or technology for storage of information, such as computer readable instructions, data structures, program modules, or other data.

The computer storage media includes but is not limited to random access memory (RAM), read only memory (ROM), electrically erasable programmable read only memory (EEPROM), flash memory or other memory technologies, compact disc read-only memory (CD-ROM), digital versatile disc (DVD) or other optical disk storage, magnetic cartridges, magnetic tape, magnetic disk storage or other magnetic storage devices, or any other medium that can be used to store desired information and that can be accessed by a computer. In addition, as is well known to those of ordinary skill in the art, communication media typically embodies computer readable instructions, data structures, program modules, or other data in a modulated data signal such as a carrier wave or other transport mechanism, and may include any information delivery media.

The above describes some embodiments of the present application with reference to the accompanying drawings, which does not limit the scope of the present application. Any modifications, equivalent replacements and improvements made by those skilled in the art without departing from the scope of the present application shall fall within the scope of the present application.

## Claims

1. A handover method applied to a network device, comprising:
updating a next hop chaining counter value and a next hop key in response to receiving a first handover request sent by a source base station for handing over a user equipment to a target base station, and sending a second handover request to the target base station;
restoring the next hop chaining counter value and the next hop key to values before the update in response to receiving a message indicating that a handover preparation fails sent by the target base station; and
sending a handover command to the source base station in response to receiving the message indicating that the handover preparation is successful sent by the target base station, to make the source base station control the user equipment to perform handover reconfiguration with the target base station.

2. The handover method according to claim 1, wherein the updating the next hop chaining counter value and the next hop key comprises:
increasing a current next hop chaining counter value in a preset manner to obtain an updated next hop chaining counter value; and
obtaining an updated next hop key according to the updated next hop chaining counter value.

3. The handover method according to claim 1, wherein after the restoring the next hop chaining counter value and the next hop key to values before the update, the handover method further comprises:
sending a message indicating handover failure to the source base station, to make the source base station send a handover request to the network device using a next candidate base station as the target base station.

4. The handover method according to claim 1, wherein the handover command comprises a current next hop chaining counter value.

5. The handover method according to claim 1, wherein a core network key and an access stratum key of the network device remain unchanged.

6. A communication system, comprising: a user equipment, a source base station, and a network device;
wherein the source base station is configured to send a first handover request for handing over the user equipment to a target base station to the network device;
the network device is configured to update a next hop chaining counter value and a next hop key in response to receiving the first handover request, and send a second handover request to the target base station;
the network device is configured to restore the next hop chaining counter value and the next hop key to values before the update in response to receiving a message indicating that a handover preparation fails sent by the target base station;
the network device is configured to send a handover command to the source base station in response to receiving a message indicating that the handover preparation is successful sent by the target base station; and
the source base station is further configured to control the user equipment to perform handover reconfiguration with the target base station according to the handover command.

7. The communication system according to claim 6, wherein the network device is configured to increase a current next hop chaining counter value in a preset manner to obtain an updated next hop chaining counter value, and obtain an updated next hop key according to the updated next hop chaining counter value.

8. The communication system according to claim 6, wherein after restoring the next hop chaining counter value and the next hop key to values before the update, the network device is further configured to send a message indicating handover failure to the source base station, and the source base station is configured to use a next candidate base station as the target base station to send a handover request to the network device in response to receiving the message indicating handover failure.

9. The communication system according to claim 6, wherein the network device is an access and mobility management module.

10. A network device, comprising: a memory, a processor, a program stored on the memory and operable on the processor, and a data bus for realizing communication between the processor and the memory, wherein when the program is executed by the processor, the operations of the handover method according to any one of claims 1 to 5 are implemented.

11. A handover method applied to a user equipment, comprising:
sending a measurement report comprising at least one candidate base station to a source base station, to make the source base station send a third handover request for handing over the user equipment to a target base station to a network device, the target base station being any one of candidate base stations;
obtaining flip times of a next hop chaining counter value according to the next hop chaining counter value in response to receiving a handover reconfiguration request comprising the next hop chaining counter value sent by the source base station, wherein the source base station is configured to send the handover reconfiguration request to the user equipment in response to receiving a handover command sent by the network device;
obtaining a next hop key according to the next hop chaining counter value and the flip times;
performing handover reconfiguration with the target base station based on the next hop chaining counter value and the next hop key.

12. The handover method according to claim 11, wherein the sending the measurement report comprising at least one candidate base station to the source base station comprises:
performing measurement based on the received measurement configuration sent by the source base station, and sending the measurement report to the source base station in response to meeting any preset trigger condition.

13. The handover method according to claim 11, wherein a core network key and an access stratum key of the network device remain unchanged.

14. A communication system, comprising: a user equipment, a source base station, and a network device;
wherein the user equipment is configured to send a measurement report comprising at least one candidate base station to the source base station;
the source base station is configured to send a third handover request for handing over the user equipment to a target base station to the network device, the target base station being any one of candidate base stations;
the source base station is further configured to send a handover reconfiguration request comprising a next hop chaining counter value to the user equipment in response to receiving a handover command sent by the network device;
the user equipment is further configured to obtain flip times of the next hop chaining counter value according to the next hop chaining counter value in response to receiving the handover reconfiguration request, and obtain a next hop key according to the next hop chaining counter value and the flip times; and
the user equipment is further configured to perform handover reconfiguration with the target base station based on the next hop chaining counter value and the next hop key.

15. The communication system according to claim 14, wherein the user equipment is configured to perform measurement based on the received measurement configuration sent by the source base station, and send the measurement report to the source base station in response to meeting any preset trigger condition.

16. The communication system according to claim 14, wherein the network device is configured to send a fourth handover request to the target base station, and send the handover command to the source base station in response to receiving a message indicating successful handover preparation sent by the target base station.

17. The communication system according to claim 16, wherein the network device is further configured to send a message indicating handover failure to the source base station in response to receiving a message indicating handover preparation failure sent by the target base station, and the source base station is configured to use a next candidate base station as the target base station to send a handover request to the network device in response to receiving the message indicating handover failure.

18. The communication system according to claim 14, wherein the network device is configured to update a next hop chaining counter value and a next hop key in response to receiving the third handover request.

19. The communication system according to claim 14, wherein the network device is an access and mobility management module.

20. A user equipment, comprising: a memory, a processor, a program stored on the memory and operable on the processor, and a data bus for realizing communication between the processor and the memory, wherein when the program is executed by the processor, the operations of the handover method according to any one of claims 11 to 13 are implemented.
